# EUROPEAN PATENT SPECIFICATION

(11) **EP 3 017 670 B1**
(45) Date of publication and mention of the grant of the patent: **05.07.2017**
(21) Application number: 15187021.9
(22) Date of filing: 28.09.2015
(51) Int. Cl.: A01B 33/02

(54) **WALK-BEHIND TILLER**
VON HINTEN LENKBARE BODENFRÄSE
SARCLEUR A POUSSER

(30) Priority: 29.09.2014 JP 2014198747; 29.09.2014 JP 2014198781
(43) Date of publication of application: 11.05.2016
(73) Proprietor: Iseki & Co., Ltd., Matsuyama-shi, Ehime 799-2692 (JP)
(72) Inventor: MIYAUCHI, Masao, Iyo-gun, Ehime 791-2193 (JP); TOMIHISA, Akira, Iyo-gun, Ehime 791-2193 (JP); KURODA, Kyosei, Iyo-gun, Ehime 791-2193 (JP); NAKAGAWA, Hideaki, Iyo-gun, Ehime 791-2193 (JP); USHIRODA, Tatsuya, Iyo-gun, Ehime 791-2193 (JP)
(74) Representative: Spengler, Robert

(56) References cited:
- JP-A- 2011 182 758
- JP-A- 2013 241 085

## Description

### BACKGROUND OF THE INVENTION

### Field of the Invention

The present invention relates to a walk-behind tiller.

### Related Art of the Invention

Conventionally, a walk-behind tiller which tills a farm field is known (see, for example, a patent document JP publication No. 2011-182758 and a patent document JP publication No. 2013-241085).

The conventional walk-behind tiller is provided with a main clutch operating lever which switches between connection and disconnection of a main clutch, and a parking brake lever which switches between operation and release of a brake device.

### SUMMARY OF THE INVENTION

### Problems to be Solved by the Invention

However, the above described conventional walk-behind tiller is not provided with a lever which restrains a switching operation of the main clutch operating lever for switching the main clutch to the connection and releases the restraining.

In view of the above-mentioned problem of the conventional walk-behind tiller, an object of the present invention is to provide a walk-behind tiller in which a compact structure is achieved by collectively arranging a lever which restrains a switching operation of a main clutch operating lever and releases the restraining of the switching operation, a main clutch operating lever, and a parking brake lever.

### Means for Solving the Problems

The 1^{st} aspect of the present invention is a walk-behind tiller comprising:
a transmission case (30) housing a transmission mechanism which transmits driving power from an engine (20) that is fixed to a frame (10) to a pair of right and left traveling wheels (2R, 2L) via right and left axles (50L, 50R), and to tilling claws (41) that till a farm filed,
characterized in that the walk-behind tiller comprises
a main clutch operating lever (400) which switches between connection and disconnection of transmission of the driving power from the engine (20);
a main clutch lock lever (500) which restrains a switching operation to the connection performed by the main clutch operating lever (400), and releases the restraining, and
a parking brake lever (600) which switches between operation and release of a parking brake device (100) which stops a movement of the traveling wheels (2R, 2L), wherein
the main clutch operating lever (400), the main clutch lock lever (500), and the parking brake lever (600) are arranged on any one side part of a left side part and a right side part of an operating handle (60) which extends reward from a vehicle body.

By means of this, plural levers related to each other can be collectively arranged, and a compact structure can be achieved.

The 2^{nd} aspect of the present invention is the walk-behind tiller according to the 1^{st} aspect of the present invention, wherein
the main clutch operating lever (400) is provided above any one (61R) of right and left gripping parts (61R, 61L) of the operating handle (60),
the main clutch lock lever (500) is provided on a right side or a left side of the gripping part (61R) above which the main clutch operating lever (400) is provided.

By means of this, the lever related to each other can be operated with one hand.

The 3^{rd} aspect of the present invention is the walk-behind tiller according to the 2^{nd} aspect of the present invention, wherein
the parking brake lever (600) is provided on an opposite side to the main clutch lock lever (500) with reference to the gripping part (61R) above which the main clutch operating lever (400) is provided.

By means of this, a main clutch operating lever, a main clutch lock lever, and a parking brake lever can be operated with one hand.

The 4^{th} aspect of the present invention is the walk-behind tiller according to the 1^{st} or 2^{nd} aspect of the present invention, wherein
the main clutch lock lever (500) always restrains the switching operation to the connection performed by the main clutch operating lever (400) when the main clutch operating lever (400) is located on a position of the disconnection.

By means of this, the main clutch operating lever can be prevented from unexpectedly switching to the connection.

The 5^{th} aspect of the present invention is the walk-behind tiller according to the 3^{rd} or 4^{th} aspect of the present invention, wherein
when the restraining by the main clutch lock lever (500) is released and the main clutch operating lever (400) is operated to the connection, and in a case where the parking brake lever (600) is located on a position of the operation, the parking brake lever (600) is linked with the operation to the connection of the main clutch operating lever (400) to move to a position of the release.

By means of this, since the operation of the parking brake device is compulsively released when travel of the walk-behind tiller is started, the travel of the walk-behind tiller does not performed during operating of the parking brake device, and loading on the parking brake device can be prevented.

### Advantageous Effects of the Invention

According to the present invention, it can be achieved to provide a walk-behind tiller in which plural levers related to each other can be collectively arranged and a compact structure can be achieved.

### BRIEF DESCRIPTION OF THE DRAWINGS

FIG. 1 is a left side view of a walk-behind tiller according to an embodiment of the present invention;
FIG. 2 is a partial plan view of the walk-behind tiller according to the present embodiment of the present invention;
FIG. 3 is a left side view of a parking brake device of the walk-behind tiller according to the present embodiment of the present invention;
FIG. 4 is a rear side partial schematic sectional view of the parking brake device fixed to the transmission case of the walk-behind tiller according to the present embodiment of the present invention;
FIG. 5 is a rear side schematic enlarged view which shows a state where the brake member, the brake member bracket, and the like of the walk-behind tiller according to the present embodiment are assembled;
FIG. 6 (a) is a left side partial enlarged view which shows mainly an external peripheral part of transmission case bearing, which holds on the inside thereof an axle bearing part (not shown) of the transmission case, and around which the parking brake device according to the present embodiment is fixed;
FIG. 6 (b) is a left side enlarged view of a brake mounting member according to the present embodiment of the present invention;
FIG. 6 (c) is a rear side enlarged view of the brake mounting member shown in FIG. 6 (b);
FIG. 7 (a) is an explanation view which shows a release state of the parking brake device at the time when a parking brake lever according to the present embodiment is located on a position of "release";
FIG. 7 (b) is an explanation view which shows an operation state of the parking brake device at the time when the parking brake lever according to the present embodiment is located on a position of "operation";
FIG. 8 is a rear side partial schematic sectional view of the parking brake device which includes another version of the brake drum body of the walk-behind tiller according to the present embodiment of the present invention;
FIG. 9 (a) is a plan view of a main clutch operating lever, a main clutch lock lever, and a parking brake lever which are arranged on a right side part of the operating handle of the walk-behind tiller according to the present embodiment of the present invention;
FIG. 9 (b) is a left side view of the configuration shown in FIG. 9 (a);
FIG. 9 (c) is a partial enlarged left side view of a plate-like member of the parking brake lever and a neighborhood thereof;
FIG. 10 (a) is a left side view which shows mainly the main clutch lock lever of the walk-behind tiller according to the present embodiment of the present invention;
FIG. 10 (b) is a schematic perspective view of the main clutch lock lever viewed from a rear-right direction;
FIG. 11 (a) is a left side view which shows mainly the parking brake lever of the walk-behind tiller according to the present embodiment of the present invention;
FIG. 11 (b) is a schematic perspective view of the parking brake lever viewed from a front-left direction;
FIG. 12 is a left side view which shows a turning range of the parking brake lever of the walk-behind tiller according to the present embodiment of the present invention;
FIG. 13 (a) is a plan view of a panel of the walk-behind tiller according to an embodiment of the present invention;
FIG. 13 (b) is a left side view of the panel which is shown in FIG. 13 (a);
FIG. 14 is a perspective view of the panel which is shown in FIG. 13 (a) and viewed from a rear-left direction;
FIG. 15 is a schematic left side view of a second walk-behind tiller according to another embodiment of the present invention, and which shows a state where the second walk-behind tiller is provided with a second operating handle the position of which can be changed in a vertical direction;
FIG. 16 (a) is an enlarged plan view which shows a state where a height adjustment lever of the second walk-behind tiller is moved to the position in which the height of the second operating handle can be adjusted;
FIG. 16 (b) is an enlarged front view which shows a state where the height adjustment lever shown in FIG. 16 (a) is viewed along the arrow K; and
FIG. 16 (c) is an enlarged front view which shows a state where the height adjustment lever shown in FIG. 16 (b) is rotated in the arrow L direction to fix the height of the second operating handle.

Description of Symbols
- 1: Walk-behind tiller
- 2L: Left side traveling wheel
- 2R: Right side traveling wheel
- 3: Second walk-behind tiller
- 10: Front frame
- 20: Engine
- 30: Transmission case
- 40: Tilling device
- 41: Tilling claws
- 50L: Left side axle
- 50R: Right side axle
- 60: Operating handle
- 60R: Right side part of the operating handle
- 60L: Left side part of the operating handle
- 100: Parking brake device
- 110: Brake drum (Abutted member)
- 400: Main clutch operating lever
- 500: Main clutch lock lever
- 600: Parking brake lever

### PREFERRED EMBODIMENTS OF THE INVENTION

Hereinafter, a configuration and operation with respect to a walk-behind tiller as one example of a walk-behind tiller according to the present invention will be described with reference to drawings.

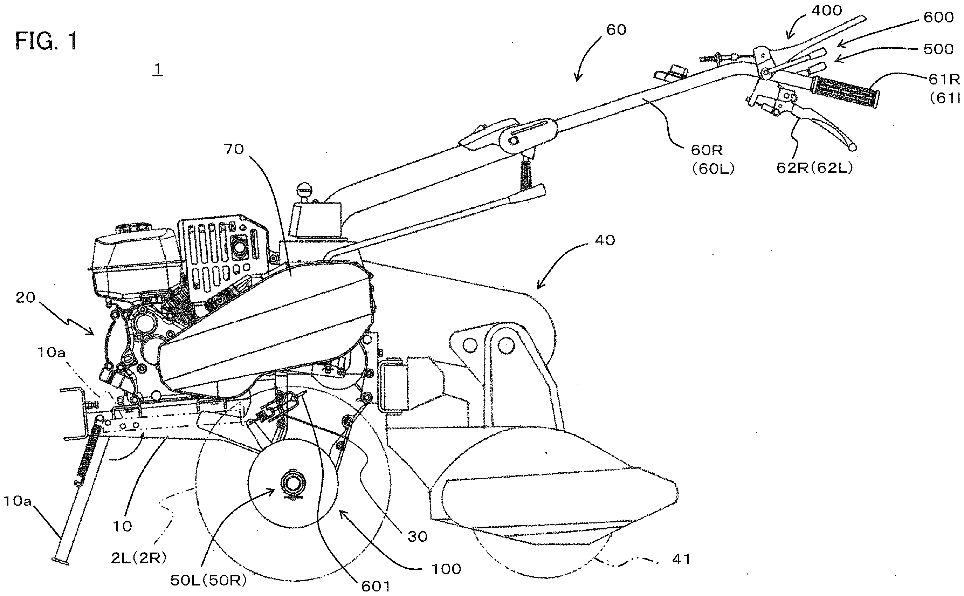

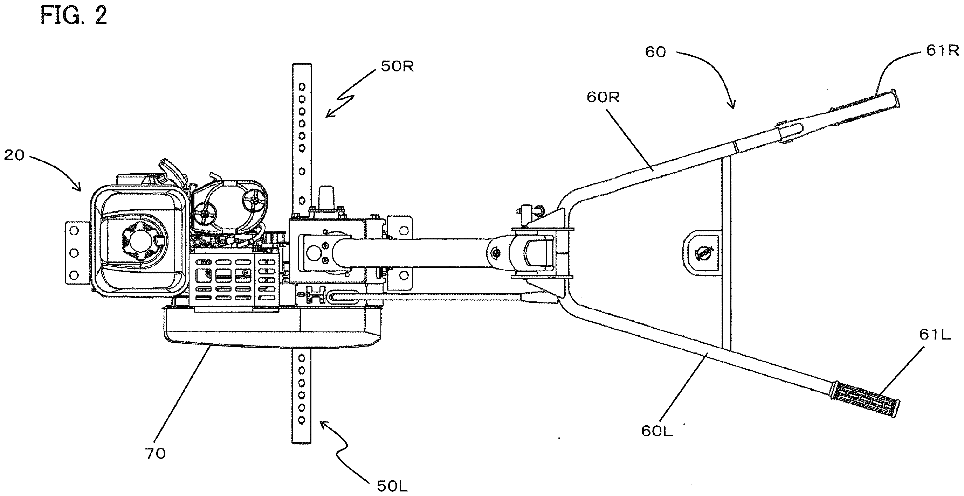

FIG. 1 is a left side view of a walk-behind tiller according to an embodiment of the present invention, and FIG. 2 is a partial plan view of the walk-behind tiller according to the present embodiment of the present invention.

By the way, in FIG. 1, regarding the operating handle 60, the right side part 60R of the operating handle is shown, but the left side part 60L of the operating handle is not shown.

Additionally, in FIG. 2, the pair of right and left traveling wheels 2R and 2L, the tilling device 40, the various kinds of levers and the like which are arranged on the pair of right and left gripping parts 61R and 61L of the operating handle 60 are not shown.

First of all, the configuration of the walk-behind tiller 1 of the present embodiment will be described with reference to those drawings mainly.

As shown in FIG. 1, the walk-behind tiller 1 is provided with an engine 20 which is mounted on a front frame 10, a transmission case 30 which is fixed to the rear part of the front frame 10, a tilling device 40 which is connected to the rear part of the transmission case 30, a pair of right and left axles 50R and 50L which are protruded from the transmission case 30 in a right-left direction (in a lateral direction), a pair of right and left traveling wheels 2R and 2L which are fixed to the axles 50L and 50R, an operating handle 60 extending rearwardly, obliquely and upwardly from the top of the transmission case 30, which is formed into a roughly Y-like shape in a plan view (see FIG. 2), and the like. A stand 10a is disposed at a front part of the front frame 10, and FIG. 1 shows a non-operation state of the walk-behind tiller 1. During the operation of the walk-behind tiller 1, as shown by a two-dot chain line, the stand 10a is accommodated in a space of the front frame 10 by allowing the stand 10a to be rotated.

A left side of the engine 20 is provided with a belt cover 70 which covers a belt drive mechanism (not shown), which transmits the driving power from the engine 20 to the transmission case 30 side, and a main clutch device (not shown) which performs a connection operation in which the driving power from the engine 20 is transmitted to the transmission case 30 side and a disconnection operation in which the driving power from the engine 20 is not transmitted to the transmission case 30 side.

The transmission case 30 houses a transmission mechanism where the driving power, which is provided from the engine 20 via the above described belt drive mechanism, is transmitted to a pair of right and left travelling wheels 2R and 2L through a pair of right and left axles 50R and 50L, to a tilling shaft (not shown), and to tilling claws 41 which are provided in the tilling device 40.

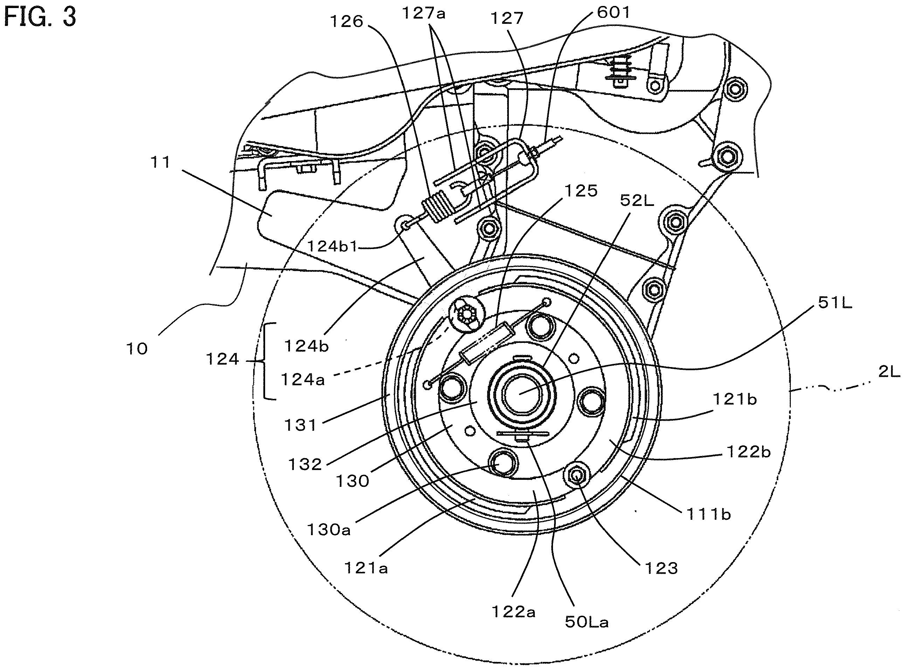

In the present embodiment, the left side axle 50L is provided with a parking brake device 100. The parking brake device 100 will be further described later in detail with reference to Figs. 3 to 8.

In the present embodiment, a main clutch operating lever 400, a main clutch lock lever 500, and a parking brake lever 600 are collectively arranged near a right gripping part 61R of a right side part 60R of the operating handle (see FIG. 1).

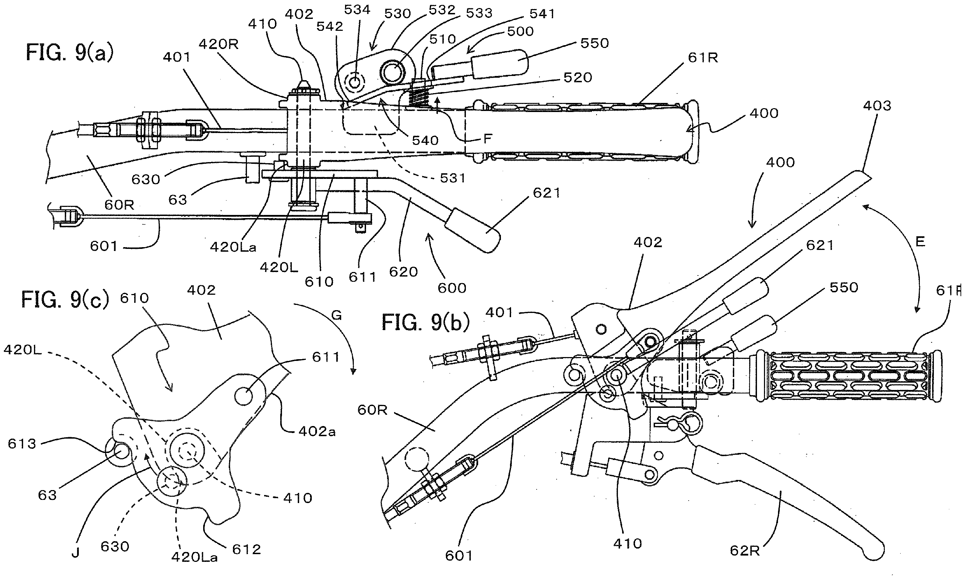

The main clutch operating lever 400 is connected to the above described main clutch device (not shown) by a main clutch cable 401 (see FIG. 9 (a)), and is a lever which switches between a "connection state (engagement state)" and a "disconnection state (disengagement state)" of the main clutch device with respect to the transmission of the driving power from the engine 20.

The main clutch lock lever 500 is a lever which always restrains the operator from operating the main clutch operating lever 400 to switch from a "disconnection position (which corresponds to the "disconnection state (disengagement state)" of the main clutch device)" to a "connection position (which corresponds to the "connection state (engagement state)" of the main clutch device)" when the main clutch operating lever 400 is located on the "disconnection position", and which is configured so that the restraining state where the switching operation to the "connection position" is restrained becomes releasable due to the releasing operation of the operator. By the way, the restraining state is also simply referred to as "restraining" or "restraint" in this application.

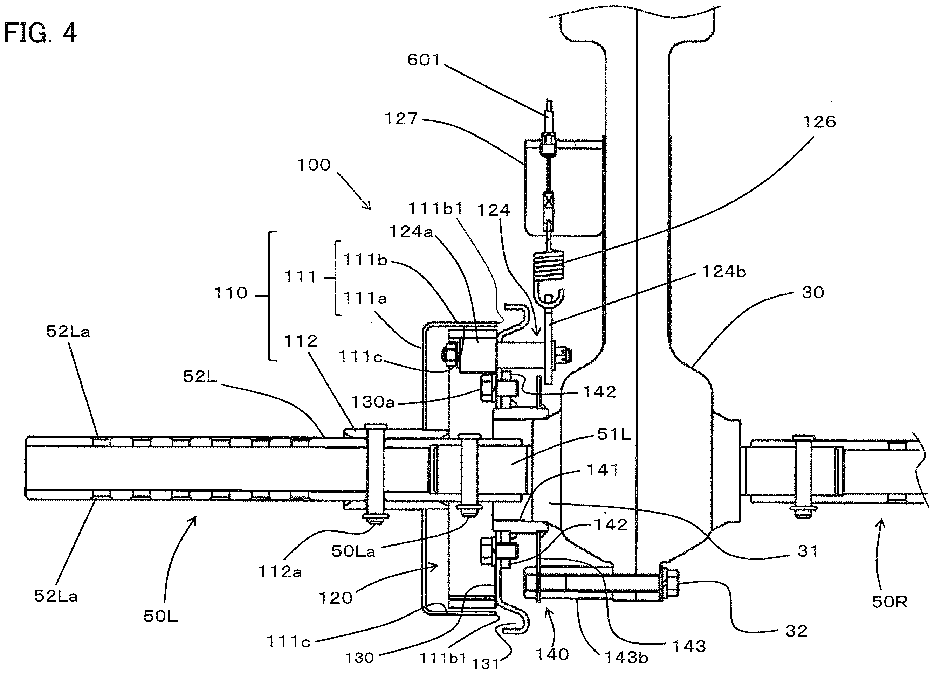

The parking brake lever 600 is connected to the parking brake device 100 by a brake cable 601 (see Figs. 4 and 9 (a)), and is a lever which switches between "operation" and "release" of the parking brake device 100 which stops the movement of the pair of right and left traveling wheels 2R and 2L.

When the operator releases the restraining due to the main clutch lock lever 500 and operates the main clutch operating lever 400 to switch from the "disconnection position" to the "connection position", in a case where the parking brake lever 600 is located on an "operation position", that is, the parking brake device 100 is in the "operation" state, the parking brake lever 600 is linked with the switching operation to the "connection position" of the main clutch operating lever 400 by the operator, so that the parking brake lever 600 moves automatically to a "release position" to release the "operation" of the parking brake device 100.

By the way, the main clutch operating lever 400, the main clutch lock lever 500, and the parking brake lever 600 will be further described later in detail with reference to Figs. 9 (a) to 12.

Next, the parking brake device 100 will be further described in detail with reference to Figs. 3 to 6.

FIG. 3 is a left side view of the parking brake device 100. By the way, regarding a brake drum 110, the inner peripheral shape and the outer peripheral shape thereof are shown in FIG. 3 so that the drawing can be easily viewed.

FIG. 4 is a rear side partial schematic sectional view of the parking brake device 100 fixed to the transmission case 30.

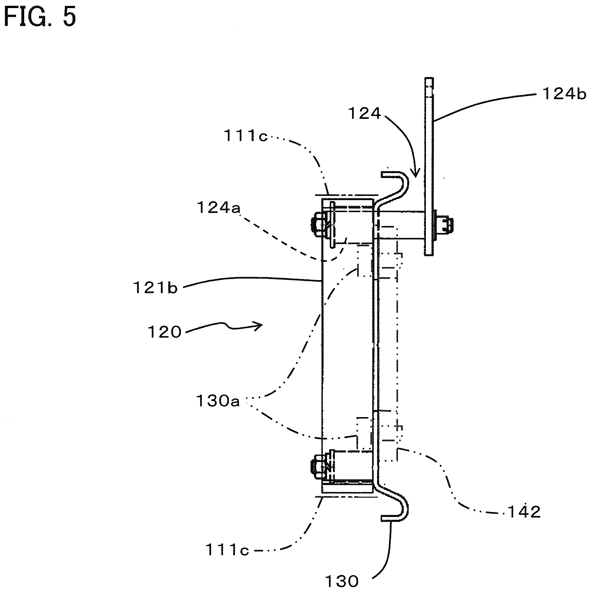

FIG. 5 is a rear side schematic enlarged view which shows a state where the brake member 120, the brake member bracket 130, and the like are assembled.

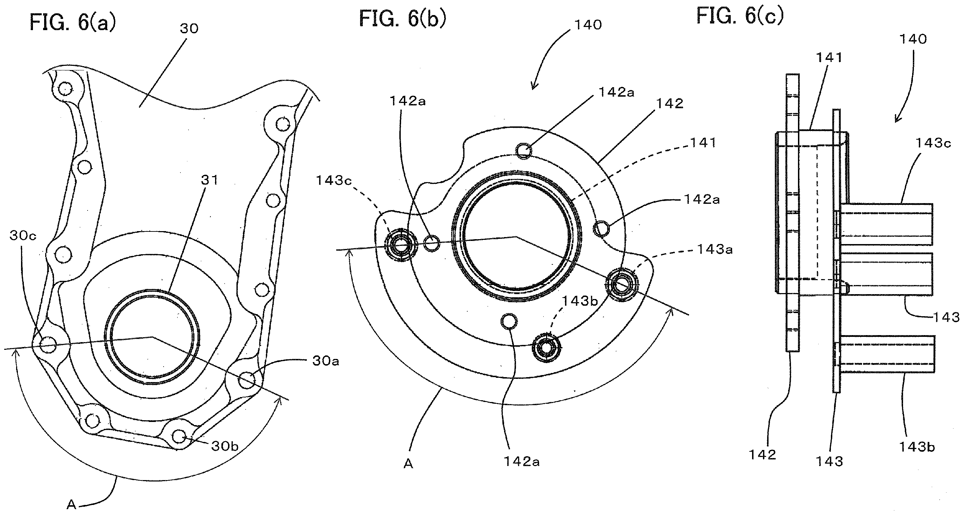

FIG. 6 (a) is a left side partial enlarged view which shows mainly an external peripheral part 31 of the transmission case bearing, which holds on the inside thereof an axle bearing part (not shown) of the transmission case 30, and around which the parking brake device 100 is fixed. FIG. 6 (b) is a left side enlarged view of a brake mounting member 140. FIG. 6 (c) is a rear side enlarged view of the brake mounting member 140 shown in FIG. 6 (b).

As shown in FIG. 3 and FIG. 4, the parking brake device 100 of the present embodiment is configured with a brake drum 110, a brake member 120, and a brake member bracket 130.

The brake drum 110 is configured integrally by a brake drum body 111 and a brake drum fixing pipe 112 which is used for fixing the brake drum body 111 to a wheel pipe 52L by a fixing pin 112a. The brake drum body 111 and the brake drum fixing pipe 112 are welded and fixed to each other. The brake drum body 111 has a flange-like part 111a and a cylindrical ring part 111b. The flange-like part 111a has a round shape in a side view and the brake drum fixing pipe 112 penetrates the center part of the flange-like part 111a. The cylindrical ring part 111b is formed by bending the external peripheral part of the flange-like part 111a along the axial direction of the left side axle 50L, that is, in parallel with the axial direction of the left side axle 50L.

That is, the brake drum 110 is rotated together with the left side axle 50L.

When carrying out maintenance work, the brake drum 110 can be easily removed from the left side axle 50L by removing the fixing pin 112a.

By the way, the left side axle 50L is constituted with the left side driving axle 51L which protrudes from the transmission case 30, the left side hollow wheel pipe 52L which has plural tread-adjusting through-holes 52La arranged at equal intervals so as to be capable of changing the fixing position of the left side traveling wheel 2L, and the fixing pin 50La. The left side hollow wheel pipe 52L is engaged with the left side driving axle 51L and fixed by the fixing pin 50La. The right side axle 50R has the same constitution as the left side axle 50L.

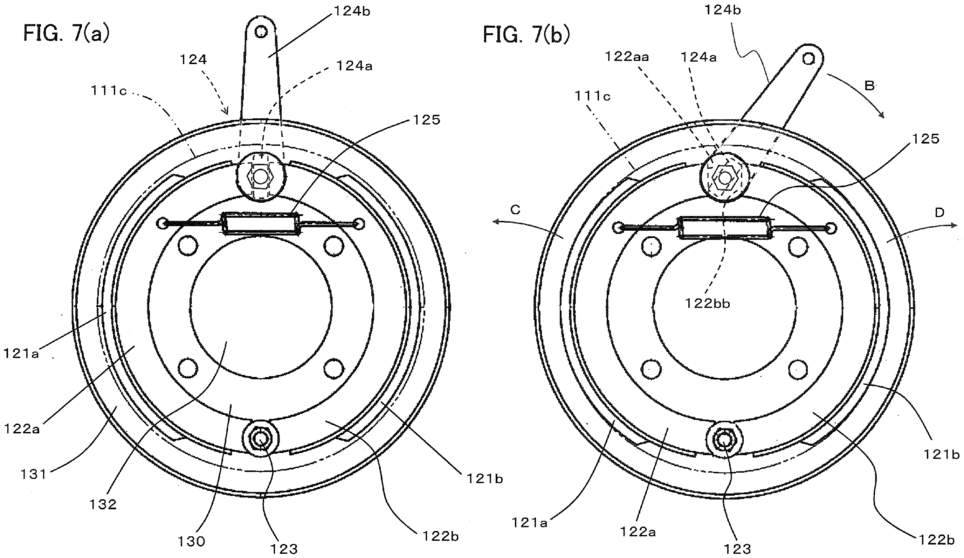

As shown mainly in FIGs. 3 to 5, the brake member 120 is configured with (1) brake shoe mounting plates 122a and 122b (see FIG. 7 (b)), (2) a connecting member 123, (3) a turning shaft member 124, (4) a brake shoe spring 125, and the like.

Here,
(1) each of the brake shoe mounting plates 122a and 122b is a plate which has an arcuate shape in a side view, brake shoes 121a and 121b are mounted on the outer peripheral surfaces of the brake shoe mounting plates 122a and 122b respectively, and each of the outer peripheral surfaces of the brake shoe mounting plates 122a and 122b is provided along the inner peripheral surface 111c (which is an abutted surface to which the brake shoes 121a and 121b are capable of abutting) of the cylindrical ring part 111b (see FIG. 4).
(2) Additionally, the connecting member 123 is a member which turnably connects one end part of the brake shoe mounting plate 122a to one end part of the brake shoe mounting plate 122b.
(3) Additionally, the turning shaft member 124 is provided with a cam member 124a which is turnably arranged between another end part 122aa of the brake shoe mounting plate 122a and another end part 122bb of the brake shoe mounting plate 122b to enlarge or narrow an interval between other end parts 122aa and 122bb, and a brake arm 124b which is an arm member to make the cam member 124a turn. The cam member 124a is disposed on a left side part of the turning shaft member 124, and the brake arm 124b is disposed on a right side part of the turning shaft member 124.
(4) Additionally, the brake shoe spring 125 is a spring to always apply an urging force in the direction in which the interval between another end part 122aa of the brake shoe mounting plate 122a and another end part 122bb of the brake shoe mounting plate 122b is allowed to be narrowed. Therefore, one end of the brake shoe spring 125 is connected to the brake shoe mounting plate 122a and another end of the brake shoe spring 125 is connected to the brake shoe mounting plate 122b. Further, the brake shoe spring 125 is the spring to surely make the parking brake device 100 be in an inoperative state, in a case where the cam member 124a does not turn.

The cam member 124a is a substantially rectangular plate-like member which has four corners formed into a smooth curved shape (see FIG. 7 (a) and FIG. 7 (b)).

As shown mainly in FIGs. 3 to 5, the brake member bracket 130 is a doughnut-like disk, in a side view, which has a circular external form and a circular hole 132 (see FIG. 7 (a)) at a center part thereof, and an outer circumference part of the brake member bracket 130 is provided with a groove part 131 which has an opening on the left side surface thereof. By fixing the connecting member 123 to the lower side of the circular hole 132, the brake member bracket 130 turnably holds the brake shoe mounting plates 122a and 122b, and turnably holds the turning shaft member 124 at the upper side of the circular hole 132.

The above described fixing pin 50La is shorter than the fixing pin 112a, and the length of the fixing pin 50La is set so as not to interfere with the brake shoe spring 125.

The brake arm 124b is connected to the brake cable 601 via a brake spring 126 as a tension spring. The brake cable 601 is held by a brake cable holder 127 having a roughly U like-shape in a side view. Regarding the brake cable holder 127, both side parts 127a and 127a (see FIG. 3) of the brake cable holder 127 are inclined downward along the inclined direction of the inclined operating handle 60 (see FIG. 1) in a side view and are welded and fixed to the left side surface of a reinforcing plate 11 which is welded to the front frame 10 to reinforce the front frame 10.

By means of this, the brake member 120 is integrally mounted on the brake member bracket 130 (see FIG. 5).

Additionally, the brake member bracket 130 on which the brake member 120 is integrally mounted is fixed to the transmission case 30 via the brake mounting member 140 (see FIG. 4).

As shown in FIGs. 4, 6 (b), and 6 (c), the brake mounting member 140 is configured with a cylindrical member 141, a first fixing plate 142, and a second fixing plate 143. The first fixing plate 142 is a roughly circular plate member which is arranged on the left side end of the cylindrical member 141 in rear side view (see FIG. 6(c)), and the second fixing plate 143 is a plate member which is arranged on the right side end of the cylindrical member 141 in rear side view (see FIG. 6 (c)).

The first fixing plate 142 is provided with four receiving holes 142a at equal intervals. A female screw is formed on each inner circumferential face of the receiving holes 142a for fixing the brake member bracket 130.

Additionally, the second fixing plate 143 is provided with three spacers 143a, 143b, and 143c in the gap which is generated between the transmission case 30 and the second fixing plate 143. Each of the spacers 143a, 143b, and 143c is corresponding to each of holes 30a, 30b, and 30c which are a part of the plurality of holes which are formed at the joint part of the right and left cases of the transmission case 30 and into which the connecting bolt 32 are inserted (see FIGs. 6 (a) to 6 (c)).

Additionally, regarding the brake mounting member 140, a right end part of the cylindrical member 141 is fitted in the external peripheral part 31 of the transmission case bearing, which holds the axle bearing part (not shown) of the transmission case 30 on the inside of the external peripheral part 31 of the transmission case bearing, and the second fixing plate 143 is fixed to the transmission case 30 by concurrently using the connecting bolts 32. That is, the connecting bolts 32 which are inserted into the holes 30a, 30b, and 30c are concurrently used for joining and fixing the right and left cases of the transmission case 30 and for fixing the second fixing plate 143 and the transmission case 30.

Additionally, the angle between the connecting bolts 32 concurrently used, that is, as shown in FIGs. 6 (a) and 6 (b), a center angle A, which is formed between the holes 30a and 30c, with a center axis of the left side axle 50L as a center is 120° or more. The center angle A is also corresponding to the angle between the concurrently used connecting bolts 32.

By means of this, the brake mounting member 140 is fixed to the transmission case 30 by concurrently using the connecting bolts 32. Additionally, the brake member bracket 130 on which the brake member 120 is integrally mounted is detachably fixed to the first fixing plate 142 which is a part of the brake mounting member 140 by using the receiving holes 142a and fixing screws 130a (see FIG. 5).

By means of this, since the parking brake device 100 can be arranged on the left side axle 50L, restrictions of the size of the brake drum 110 and the like are reduced, so that setting of the brake capacity becomes easy.

Additionally, by arranging the parking brake device 100 on the side face of the transmission case 30, tread width of the traveling wheels 2L and 2R can be adjusted easily.

Additionally, by disposing the brake arm 124b in a position superposed with a projection area of the reinforcing plate 11 in a side view, an external object can be prevented from being caught in the brake arm 124b.

Additionally, as shown in FIG. 3, the part which holds the brake cable 601 of the brake cable holder 127 protrudes from the reinforcing plate 11 in a side view, and only both the side parts 127a and 127a of the brake cable holder 127 are welded and fixed to the left side surface of the reinforcing plate 11 but, since the brake cable holder 127 has the roughly U like-shape in a side view, it is possible to realize a firm configuration as the brake cable holder 127.

Additionally, since the brake spring 126 is located between both the side parts 127a and 127a of the brake cable holder 127, the brake spring 126 is protected, so that unexpected malfunction of the parking brake device 100 can be prevented.

Additionally, since the brake spring 126 is located between both the side parts 127a and 127a of the brake cable holder 127, the brake spring 126 is covered, so that the brake spring 126 can be prevented from being detached by catching from the outside.

Additionally, since the brake member bracket 130 on which the brake member 120 is integrally mounted is fixed to the transmission case 30 via the brake mounting member 140, the maintenance work in which the replacement of the brake member 120 or the like is included can be easily performed by merely removing the fixing screws 130a, and it is unnecessary to remove the connecting bolts 32.

Additionally, by fixing the brake mounting member 140 to the external peripheral part 31 of the transmission case bearing, which holds on the inside thereof an axle bearing part (not shown) of the transmission case 30, it is easy to ensure positioning accuracy between the center of the brake shoes 121a, 121b and the center of the brake drum 110, so that the brake shoes 121a and 121b can be prevented from generating an uneven contact with the inner peripheral surface of the brake drum 110, and the braking ability can be exhibited to the maximum. Additionally, since the uneven contact with the inner peripheral surface of the brake drum 110 can be prevented, the brake noise can be prevented.

Additionally, by allowing the center angle A, which is formed between the holes 30a and 30c and which is also corresponding to the angle between the concurrently used connecting bolts 32, to be 120° or more, the brake mounting member 140 can be prevented from inclining relatively to the left side axle 50L, and the brake shoes 121a and 121b can be prevented from generating the uneven contact with the inner peripheral surface of the brake drum 110.

Additionally, since the bolts which fix the brake mounting member 140 to the transmission case 30 and the connecting bolts 32 are used concurrently, the number of the bolts can be minimized to attain cost reduction.

Additionally, as shown in FIG. 3, since the fixing pin 50La is set to have a length which does not interfere with the brake shoe spring 125 in a rotation direction, after the left side wheel pipe 52L is fixed to the left side driving axle 51L with the fixing pin 50La, it is possible to detachably fix the brake member bracket 130, on which the brake member 120 is integrally mounted, to the brake mounting member 140 with the fixing screws 130a, so that the assembly of the parking brake device 100 is facilitated.

Additionally, as described above, since the fixing pin 50La is set to have the length which does not interfere with the brake shoe spring 125 in a rotation direction, it is possible to arrange the fixing pin 50La at any place such as, for example, the outside position, so that it is possible to enhance bending strength of the left side driving axle 51L.

Additionally, since a connection part 124b1 of the brake arm 124b, to which the brake spring 126 is connected, is arranged at a position separate from the ground and above the left side axle 50L, the intrusion of water and contamination on the ground into the connection part 124b1 can be prevented.

Additionally, since the brake arm 124b is arranged nearly at right angles to the inclined direction of the inclined operating handle 60 (see FIG. 1), the brake cable 601 has fewer bent portions and it is possible to efficiently transfer the operating force of the parking brake lever 600, so that the parking brake lever 600 can be operated with a light operating force.

Next, operation of the parking brake device 100 will be described with reference to FIGs. 7 (a) and 7 (b).

FIG. 7 (a) is an explanation view which shows a release state of the parking brake device 100 at the time when the parking brake lever 600 (see FIG. 1) is located on a position of "release". FIG. 7 (b) is an explanation view which shows an operation state of the parking brake device 100 at the time when the parking brake lever 600 is located on a position of "operation".

When the parking brake lever 600 (see FIG. 1) is located on the position of "release", as shown in FIG. 7 (a), the brake arm 124b is arranged along a vertical direction, the cam member 124a is located at the position where long sides of a roughly rectangular shape, which the cam member 124a has in side view, are located along the vertical direction, and by acting of a contraction force of the brake shoe spring 125, the interval between another end part 122aa (which contacts with the left long side of the cam member 124a shown in FIG. 7 (a))(see the reference number 122aa of FIG. 7 (b)) of the brake shoe mounting plate 122a and another end part 122bb (which contacts with the right long side of the cam member 124a shown in FIG. 7 (a))(see the reference number 122bb of FIG. 7 (b)) of the brake shoe mounting plate 122b becomes narrowest.

By means of this, since the brake shoes 121a and 121b keep a specific interval to the inner peripheral surface 111c of the cylindrical ring part 111b of the brake drum body 111 (see FIG. 4), the parking brake device 100 does not operate and is in a "release" state.

On the other hand, when the parking brake lever 600 (see FIG. 1) is moved to the position of "operation", as shown in FIG. 7 (b), the brake arm 124b turns in an arrow B direction around the turning shaft member 124 (see FIG. 5).

By means of this, since the cam member 124a having the roughly rectangular shape in a side view turns in the arrow B direction, another end part 122aa of the brake shoe mounting plate 122a turns in an arrow C direction around the connecting member 123, another end part 122bb of the brake shoe mounting plate 122b turns in an arrow D direction around the connecting member 123, and another end part 122aa and another end part 122bb are moved equidistantly in a direction to be separated from each other against the contraction force of the brake shoe spring 125.

By means of this, since the brake shoes 121a and 121b are pushed against the inner peripheral surface 111c of the cylindrical ring part 111b of the brake drum body 111, the parking brake device 100 is placed in an "operation" state.

Additionally, by means of the above mentioned configuration, the operating members which are disposed around the left side axle 50L are the parking brake device 100, the brake cable 601, the brake spring 126, and the like, and when the operation members are removed, an axle rotor can be attached and an axle type tilling can be performed.

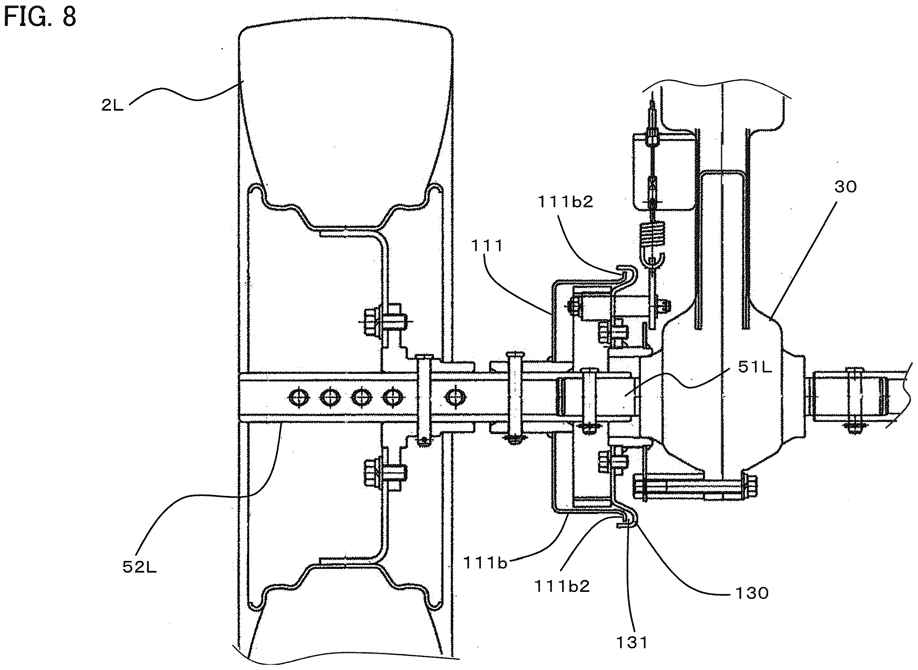

By the way, in the above-described embodiment, a case is described where a gap is generated between an edge part 111b1 of the cylindrical ring part 111b of the brake drum body 111 and the groove part 131 which is formed on the outer circumference part of the brake member bracket 130. However, the present invention is not limited to this and, for instance, as shown in FIG. 8, an edge part 111b2 of the cylindrical ring part 111b of the brake drum body 111 may be allowed to be made into labyrinth structure where the edge part 111b2 is bent in a direction to expand the edge part 111b2. By means of this, a gap is not generated between the edge part 111b2 and the groove part 131 which is formed on the outer circumference part of the brake member bracket 130, the intrusion of water and contamination into the brake drum 110 can be prevented, the brake performance is maintained, and the safety is secured. Here, FIG. 8 is a rear side partial schematic sectional view of the parking brake device 100 which includes another version of the brake drum body 111.

Next, the main clutch operating lever 400, the main clutch lock lever 500, and the parking brake lever 600 will be further described with reference to FIGs. 9 (a) to 12.

FIG. 9 (a) is a plan view of the main clutch operating lever 400, the main clutch lock lever 500, and the parking brake lever 600 which are arranged on a right side part 60R of the operating handle. FIG. 9 (b) is a left side view of the configuration shown in FIG. 9 (a). FIG. 9 (c) is a partial enlarged left side view of the plate-like member 610 of the parking brake lever 600 and the neighborhood thereof. By the way, regarding FIG. 9 (c), a parking brake lever body 620 is not shown so that the drawing can be easily viewed.

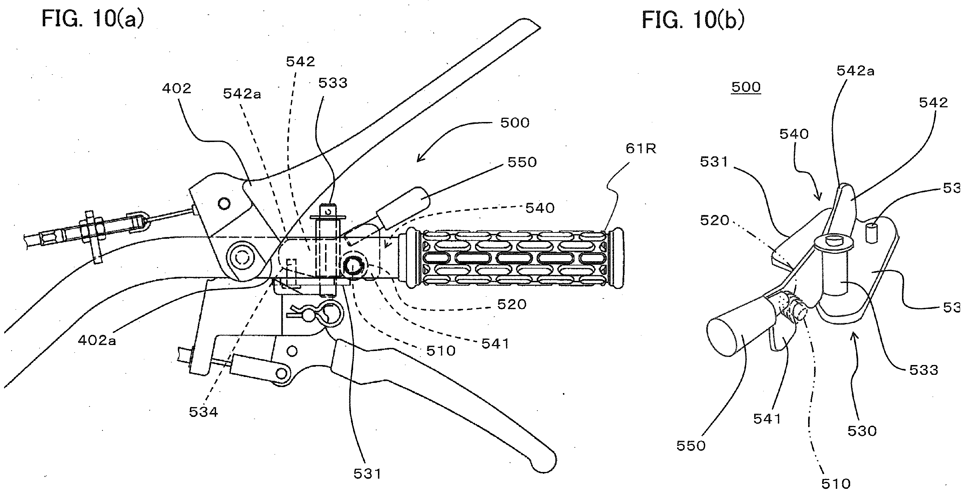

FIG. 10 (a) is a left side view which shows the main clutch lock lever 500, and FIG. 10 (b) is a schematic perspective view of the main clutch lock lever 500 viewed from a rear-right direction.

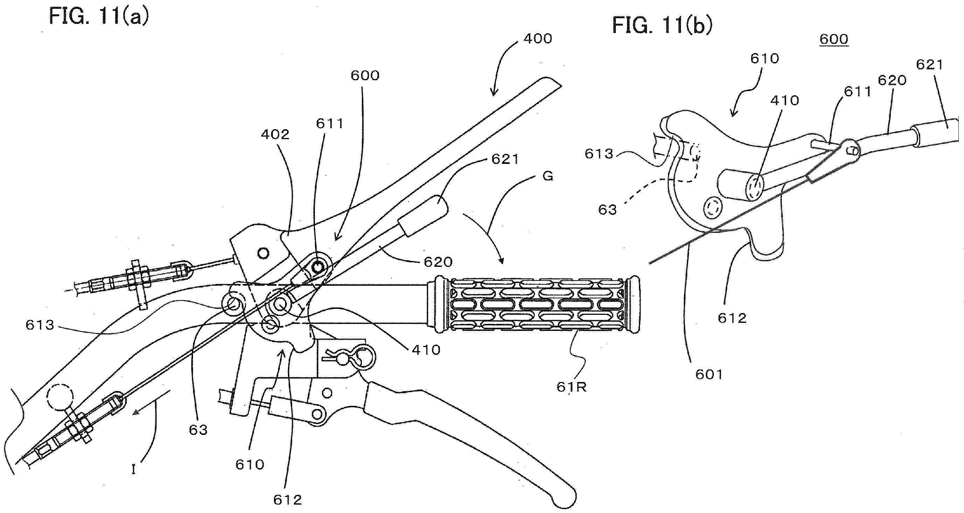

FIG. 11 (a) is a left side view which shows the parking brake lever 600, and

FIG. 11 (b) is a schematic perspective view of the parking brake lever 600 viewed from a front-left direction.

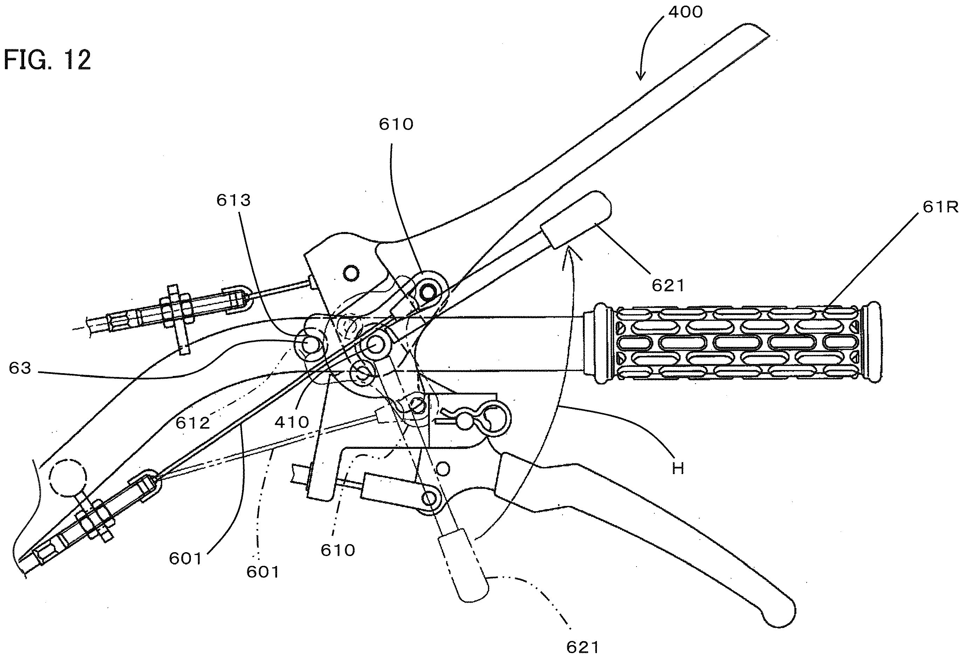

FIG. 12 is a left side view which shows the turning range of the parking brake lever 600.

Regarding the main clutch operating lever 400, as shown in FIGs. 9 (a) and 9 (b), a front end part 402 of the main clutch operating lever 400 is turnably supported by a first turning shaft 410 which is arranged in front of the right gripping part 61R of the right side part 60R of the operating handle and in a right-left direction, and the main clutch cable 401 is connected to the front end part 402. By means of this, the main clutch operating lever 400 is always pulled in a direction of the main clutch device (not shown) which is covered by the belt cover 70.

The main clutch operating lever 400 is inclined diagonally upwards from the front end part 402 toward a rear end part 403.

By means of this, when the operator grips the main clutch operating lever 400 and the right gripping part 61R together and stops gripping them, the main clutch operating lever 400 is turned in an arrow E direction.

That is, by gripping the main clutch operating lever 400, the main clutch cable 401 is pulled in a rear direction, so that the main clutch device gets into a "connection state" and the driving power from the engine 20 is transmitted to the transmission case 30 side. Additionally, by stopping gripping the main clutch operating lever 400, the main clutch cable 401 is pulled in a front direction, so that the main clutch device gets into a "disconnection state" and the driving power from the engine 20 is not transmitted to the transmission case 30 side.

By the way, it is necessary to release the restraining state where the main clutch lock lever 500 restrains the movement of the main clutch operating lever 400 by operating the main clutch lock lever 500 prior to the operation of the main clutch operating lever 400 or simultaneously in order to make the main clutch operating lever 400 turn in a clockwise direction in FIG. 9 (b). This matter will be described later in detail.

By the way, as shown in FIG. 1, a right side clutch operating lever 62R and a left side clutch operating lever 62L are turnably disposed below the right gripping part 61R and the left gripping part 61L respectively. When the operator grips the right side clutch operating lever 62R and the right gripping part 61R with the right hand, a right side clutch which is housed in the transmission case 30 gets into a disconnection state. The operator performs the above described operation when the operator wants to turn the body of the walk-behind tiller 1 to the right. When the operator wants to turn the body of the walk-behind tiller 1 to the left, the operator grips the left side clutch operating lever 62L and the left gripping part 61L with the left hand, so that a left side clutch which is housed in the transmission case 30 gets into a disconnection state.

The main clutch lock lever 500 is arranged on the right side of the right side part 60R of the operating handle in a plan view, as shown in FIG. 9 (a).

The main clutch lock lever 500 is configured with a pin member 510, a compression spring member 520 which is mounted on the pin member 510, a base plate 530, a lock plate 540 which is turnably arranged on the base plate 530, a lock operating knob 550 which is fixed to the lock plate 540, and the like, as shown in FIGs. 9 (a), 10 (a), and 10 (b). Additionally, the pin member 510 protrudes from the right side surface of the right side part 60R of the operating handle which is provided with the main clutch operating lever 400. Additionally, regarding the base plate 530, a one end part 531 thereof is fixed on the lower surface of the right side part 60R of the operating handle which is provided with the main clutch operating lever 400.

As described above, since the compression spring member 520 is mounted on the pin member 510 as a shaft, it is possible to mount the compression spring member 520 on a place which is not a plane such as the side surface of the right side part 60R of the operating handle or the like without forming a sill structure to secure the plane.

Additionally, regarding the base plate 530, another end part 532 thereof projects from the lower surface of the right side part 60R of the operating handle in the right and horizontal direction. Another end part 532 is provided with a turning shaft 533 in a direction orthogonal to the pin member 510, and is provided with a stopper pin 534 in such a manner that the stopper pin 534 is provided in parallel with the turning shaft 533.

Additionally, as shown in FIG. 9 (a), the lock plate 540 is a roughly inverse V-shaped plate member in a plan view, and the bent part of the lock plate 540 is turnably supported by the turning shaft 533. Since a long side part 541 of the lock plate 540 is always pushed in an arrow F direction (see FIG. 9 (a)) by the compression spring member 520, an upper end part 542a of a short side part 542 of the lock plate 540 is located under a front end part 402 of the main clutch operating lever 400.

Additionally, the lock plate 540 which is made from metal is formed so that the upper end part 542a of the lock plate 540 has a shape along a lower side edge part 402a of the front end part 402 of the main clutch operating lever 400 which is made from resin.

By means of this, when the operator presses down the main clutch operating lever 400 with the right hand, the upper end part 542a of the lock plate 540 abuts against a lower side edge part 402a of the main clutch operating lever 400 to always restrain the switching operation to the "connection position" of the main clutch operating lever 400.

On the other hand, when the operator presses the lock operating knob 550 in a left direction using the index finger of the right hand or the like, the long side part 541 of the lock plate 540 is pressed against the repulsive force of the compression spring member 520, so that the short side part 542 of the lock plate 540 turns in a clockwise direction in a plan view about the turning shaft 533 and the upper end part 542a of the short side part 542 of the lock plate 540 is moved from the position under the front end part 402 of the main clutch operating lever 400 to the right outside position. Accordingly, the switching operation to the "connection position" of the main clutch operating lever 400 is not restrained, that is, the above described restraining is released, and the main clutch operating lever 400 can be moved to the "connection position".

By the way, when the short side part 542 of the lock plate 540 turns in a clockwise direction in a plan view about the turning shaft 533, the short side part 542 stops on abutting against the stopper pin 534.

By the above described configuration, the operator cannot perform the switching operation that the operator switches the main clutch operating lever 400 from the "disconnection position" to the "connection position" unless the operator does not press the lock operating knob 550 in a left direction using the index finger of the right hand or the like. Accordingly, an erroneous operation that the main clutch operating lever 400 is unexpectedly switched from the "disconnection position" to the "connection position" can be prevented.

Additionally, since the metal lock plate 540 is formed so that the upper end part 542a of the lock plate 540 has the shape along the lower side edge part 402a of the front end part 402 of the resin main clutch operating lever 400, a contact of the upper end part 542a of the metal lock plate 540 and the lower side edge part 402a of the resin main clutch operating lever 400 becomes a line contact or a surface contact and does not become a point contact, so that the breakage or abrasion of the resin main clutch operating lever 400 is suppressed.

Additionally, when the operator stops pressing the lock operating knob 550 in a left direction using the index finger of the right hand or the like, the main clutch lock lever 500 is returned to an original position (which is the position where the main clutch lock lever 500 restrains the switching operation to the "connection position" of the main clutch operating lever 400) by the repulsive force of the compression spring member 520.

The parking brake lever 600 is arranged on the left side of the right side part 60R of the operating handle on which the main clutch operating lever 400 is disposed, in a plan view, as shown in FIGs. 9 (a) and 11 (a).

Additionally, the parking brake lever 600 is configured with a plate-like member 610 and a parking brake lever body 620 whose one end part is welded and fixed to the plate-like member 610 and whose another end part is provided with a parking brake knob 621, as shown in FIGs. 9 (a), 11 (a), and 11 (b). The plate-like member 610 is provided with a brake cable connecting pin 611 for connecting the brake cable 601, which protrudes from the plate-like member 610 to the left side thereof, and is turnably arranged on the left side of the front end part 402 of the main clutch operating lever 400 in a plan view. Additionally, the main clutch operating lever 400 is concurrently used as a turning shaft of the plate-like member 610.

Additionally, the plate-like member is provided with a first stopping part 612 and a second stopping part 613 which are formed for regulating an operation range of the parking brake lever 600.

When the operator pushes the parking brake knob 621 (which is indicated with a solid line in FIGs. 12 and 11 (a)) downward with the thumb of the right hand to make the parking brake knob 621 turn in a clockwise direction (see an arrow G direction in FIG. 11 (a)) in a left side view, the first stopping part 612 (see the first stopping part 612 indicated with a two-dot chain line in FIG. 12) abuts against the lower surface of a brake lever stopper pin 63 which protrudes from the left side surface of the right side part 60R of the operating handle in the left and horizontal direction, so that the turning of the parking brake knob 621 is stopped and the parking brake device 100 is switched from the "operation" (see FIG. 7 (b)) to the "release" (see FIG. 7 (a)).

On the other hand, when the operator pulls the parking brake knob 621 (which is indicated with a two-dot chain line in FIG. 12) upward with the thumb of the right hand to make the parking brake knob 621 turn in a counterclockwise direction (see an arrow H direction in FIG. 12) in a left side view, the second stopping part 613 (see the second stopping part 613 indicated with a solid line in FIG. 12) abuts against the upper surface of the brake lever stopper pin 63, so that the turning of the parking brake knob 621 is stopped and the parking brake device 100 is switched from the "release" (see FIG. 7 (a)) to the "operation" (see FIG. 7 (b)).

By the way, after the parking brake lever 600 is switched to the "operation position", the parking brake knob 621 is located on a left upper side of the right gripping part 61R. Therefore, when it is necessary to push or pull the body of the walk-behind tiller 1 during the "operation" of the parking brake device 100, the operator can release the "operation" of the parking brake device 100 by pushing the parking brake knob 621 (which is indicated with a solid line in FIGs. 12 and 11 (a)) downward with the thumb of the right hand while gripping the pair of right and left gripping parts 61R and 61L.

By the way, the brake cable 601 is always drawn in an arrow I direction (see FIG. 11 (a)) by the functions of the brake shoe spring 125 and the brake spring 126 which are disposed on the parking brake device 100. Therefore, when the parking brake knob 621 is turned in a clockwise direction (see an arrow G direction of FIG. 11 (a)), the operator needs to apply a force opposed to the urging force which acts in the arrow I direction to the parking brake knob 621 in a certain distance, that is, in the certain distance, and the brake cable 601 is drawn in a direction opposite to the arrow I direction by the brake cable connecting pin 611. However, after the brake cable connecting pin 611 is moved in the certain distance, since the brake cable connecting pin 611 goes over the dead point thereof, the plate-like member 610 and the parking brake lever body 620 are swiftly turned in the clockwise direction by the urging force which acts in the arrow I direction even if the operator does not add force, so that the operation of the parking brake device 100 is released.

Next, the configuration, in which the parking brake lever 600 which is located on the "operation position" for operating the parking brake device 100 is linked with the switching operation to the "connection position" of the main clutch operating lever 400, so that the parking brake lever 600 moves automatically to the "release position" for releasing the "operation" of the parking brake device 100, will be described with reference to FIGs. 9 (a), 9 (b), and 9 (c).

The plate-like member 610 of the parking brake lever 600 is provided with an interlocking pin 630 (see FIGs. 9 (a) and 9 (c)) which protrudes from the plate-like member 610 to the right side thereof.

On the other hand, right and left side surfaces of the front end part 402 of the main clutch operating lever 400 are provided with a pair of right and left bank parts 420R and 420L which protrude from areas surrounding the through-hole for the first turning shaft 410 to both outsides respectively.

As shown in FIG. 9 (c), when the main clutch operating lever is switched to the "connection position", the left bank part 420L turns about the first turning shaft 410 in the clockwise direction (see an arrow G direction shown in FIG. 9 (c)) and a step part 420La of the left bank part 420L abuts against the interlocking pin 630, so that the interlocking pin 630 is made to move in an arrow J direction.

By means of this, after the plate-like member 610 is compulsively turned in the arrow G direction about the first turning shaft 410 and the brake cable connecting pin 611 is moved in the above described certain distance, since the brake cable connecting pin 611 goes over the dead point thereof, the plate-like member 610 and the parking brake lever body 620 are swiftly turned in the clockwise direction, the second stopping part 612 abuts against the brake lever stopper pin 63, and the turning is stopped, so that the operation of the parking brake device 100 is released.

As described above, since the first turning shaft 410 of the main clutch operating lever 400 is commonly usable as a turning shaft of the parking brake lever 600, the number of the shafts can be reduced.

Additionally, since the parking brake lever 600 and the main clutch operating lever 400 can be turned by the same axis, it is easy to interlock both movements.

Additionally, when the main clutch operating lever 400 is switched to the "connection position" to start the travel of the walk-behind tiller 1, the "operation" of the parking brake device 100 is compulsively released by linking the switching operation, so that the travel of the walk-behind tiller 1 is not performed during operating of the parking brake device 100 and the loading on the parking brake device 100 can be prevented.

Additionally, as described above, in the present embodiment, the main clutch operating lever 400, the main clutch lock lever 500, and the parking brake lever 600 are collectively arranged on the right side part 60R of the operating handle (see FIG. 1). That is, by collectively arranging both of the main clutch operating lever 400 and the main clutch lock lever 500 or both of the main clutch operating lever 400 and the parking brake lever 600, which are related mutually, an operability of the walk-behind tiller 1 is improved, and a compact structure can be achieved.

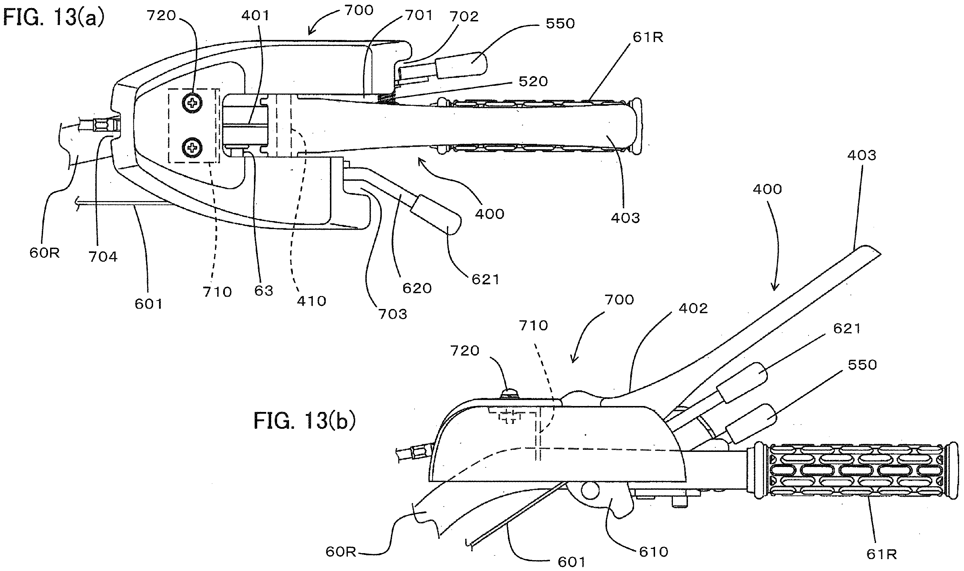

Next, a panel 700 which is disposed on the right side part 60R of the operating handle to cover the main clutch operating lever 400, the main clutch lock lever 500, and the parking brake lever 600 will be described with reference to Figs. 13 (a) to 14.

FIG. 13 (a) is a plan view of the panel 700 of the walk-behind tiller 1 of the present embodiment, and FIG. 13 (b) is a left side view of the panel 700 which is shown in FIG. 13 (a).

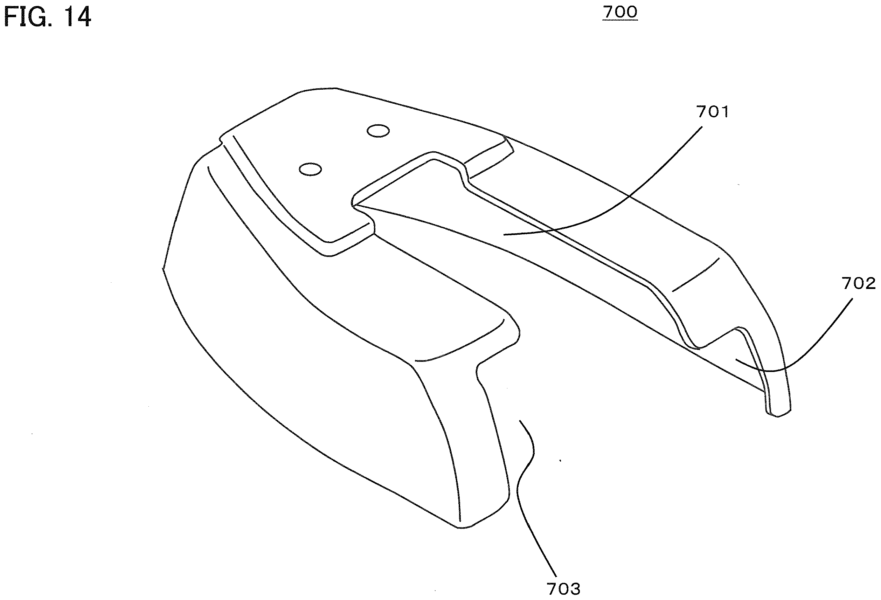

FIG. 14 is a perspective view of the panel 700 which is viewed from a rear-left direction.

A panel fixing stay 710 which has an L-shape in a side view is welded and fixed on the upper surface of the right side part 60R of the operating handle and in front of the first turning shaft 410.

The panel 700 is fixed to the panel fixing stay 710 by the fastening members 720, and covers the main clutch operating lever 400, the main clutch lock lever 500, and the parking brake lever 600.

The panel 700 is provided with a first notch part 701, and the first notch part 701 is disposed on a place which corresponds to a peripheral area of the front end part 402 of the main clutch operating lever 400 in a plan view so that the main clutch operating lever 400 does not interfere with the panel 700 when the main clutch operating lever 400 is located on the "disconnection position" (see FIGs. 13 (a) and 14).

Additionally, the panel 700 is provided with a second notch part 702 and a third notch part 703 (see FIGs. 13 (a) and 14). That is, the second notch part 702 is disposed on a right side of the first notch part 701 in a plan view so that the main clutch lock lever 500 does not interfere with the panel 700, and the third notch part 703 is disposed on a left side of the first notch part 701 in a plan view so that the parking brake lever 600 does not interfere with the panel 700.

Further, the panel 700 is provided with a fourth notch part 704 in front of the first notch part 701 in a plan view so as to avoid interfering between the panel 700 and the main clutch cable 401 (see FIG. 13 (a)).

By means of this, a state in which the main clutch operating lever 400, the main clutch lock lever 500, and the parking brake lever 600 which are disposed on the right side part 60R of the operating handle are fully exposed to view can be avoided, and the design property can be improved by arrangement of the panel 700.

By means of this, since a movable part other than operating parts such as a lever, a knob, and the like, protruding pins, and plates are covered by the panel 700, they are not directly touched by the hand of the operator, so that the prevention of an accident can be realized and the safety is improved.

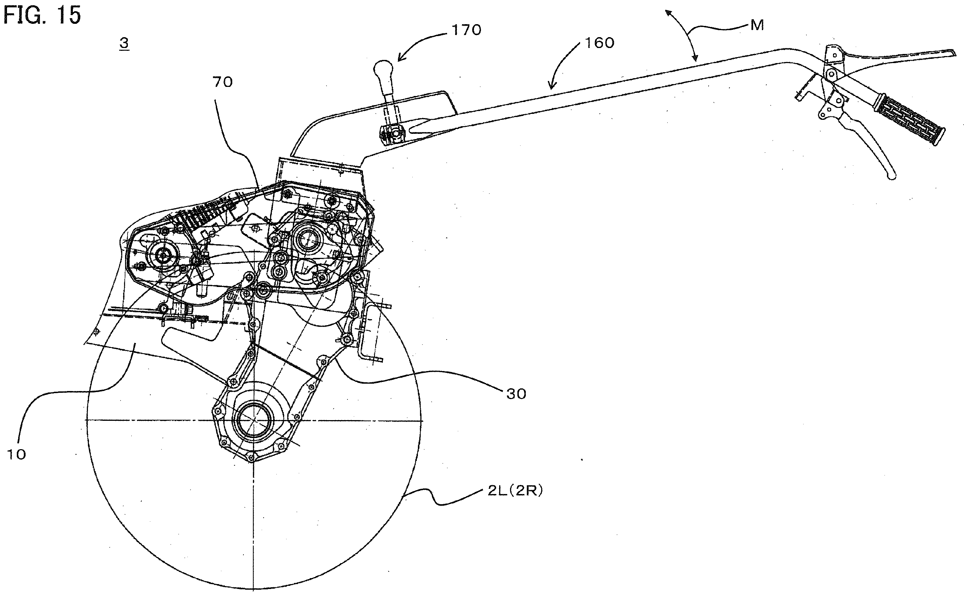

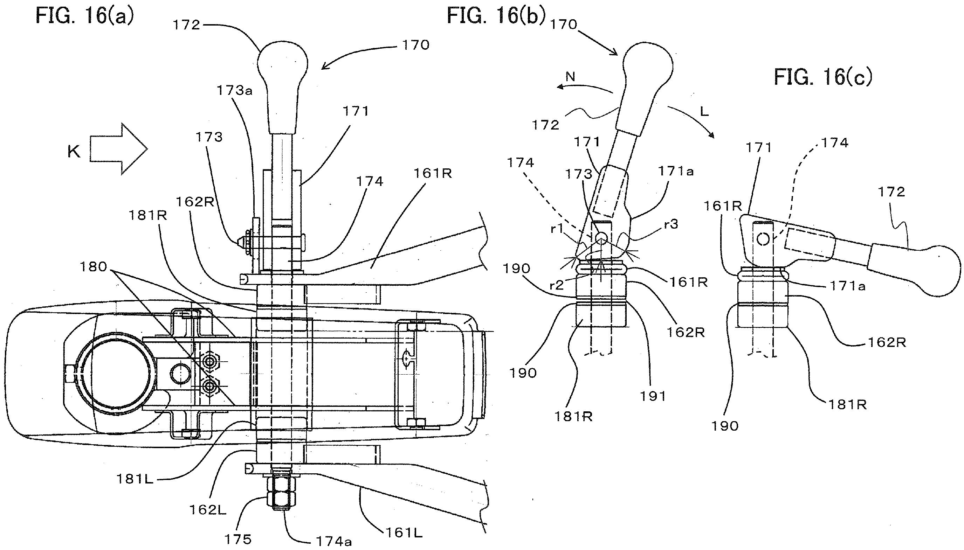

Next, a configuration and operation of a second walk-behind tiller 3 which is provided with a second operating handle 160 and a height adjustment lever 170 for changing a position of the second operating handle 160 in a vertical direction will be described with reference to Figs. 15, 16 (a) to 16 (c). In the case of the second walk-behind tiller, the second operating handle 160 and the height adjustment lever 170 are substituted for the above described operating handle 60 mounted on the walk-behind tiller 1.

FIG. 15 is a schematic left side view of the second walk-behind tiller 3 which is provided with the second operating handle 160 the position of which can be changed in the vertical direction, and the engine 20 and the tilling device 40 are not shown in FIG. 15.

As for the same configurations as those of the walk-behind tiller 1 which is explained using FIG. 1, the same reference numerals are used in FIG. 15, and the explanation will be omitted.

FIG. 16 (a) is an enlarged plan view which shows a state where the height adjustment lever 170 of the second walk-behind tiller 3 is moved to the position in which the height of the second operating handle 160 can be adjusted. FIG. 16 (b) is an enlarged front view which shows a state where the height adjustment lever 170 shown in FIG. 16 (a) is viewed along the arrow K. FIG. 16 (c) is an enlarged front view which shows a state where the height adjustment lever 170 shown in FIG. 16 (b) is rotated in the arrow L direction to fix the height of the second operating handle 160.

The height adjustment lever 170, as shown in FIGs. 16 (a) and 16 (b), is configured with a height adjustment cam 171, a lever gripping part 172 which is fixed to the height adjustment cam 171, a penetrating bolt 174 to which the height adjustment cam 171 is turnably connected via a turning shaft 173, a turning shaft support part 173a which turnably supports the turning shaft 173, and the like.

The penetrating bolt 174 penetrates all of the through-holes which are disposed on a pair of right and left operating handle pipes 161R and 161L tip parts of which are compressed and formed in plate shapes respectively, on a pair of right and left first inner clip washers 162R and 162L which are welded and fixed to insides of the tip parts of the pair of right and left operating handle pipes 161R and 161L respectively, and on a pair of right and left second inner clip washers 181R and 181L which are welded and fixed to outsides of an handle mounting stay 180 respectively, and the tip end part 174a of the penetrating bolt 174 is fastened with the nuts 175.

By the way, since the turning shaft support part 173a which turnably supports the turning shaft 173 is welded and fixed to the tip part of the right side operating handle pipe 161R, which is compressed and formed in the plate shape, the height adjustment lever 170 is turnably fixed to the tip part of the right side operating handle pipe 161R via the turning shaft support part.

Further, each of the first right inner clip washer 162R and the second right inner clip washer 181R has plural uneven parts 190, which radially extend from the center of the through-hole to the periphery, on each of opposite surfaces thereof which are opposed to each other. Each of the first left inner clip washer 162L and the second left inner clip washer 181L also has plural uneven parts 190, which radially extend from the center of the through-hole to the periphery, on each of opposite surfaces thereof which are opposed to each other.

In a state where the height adjustment lever 170 is moved to the position in which the height of the second operating handle 160 can be adjusted (see FIGs. 16 (a) and 16 (b)), a gap 191 is generated between the uneven parts 190 and the uneven parts 190 which are formed on the opposite surfaces. In a case where the gap 191 exists, since the pair of right and left operating handle pipes 161R and 161L can be turned in the vertical direction about the penetrating bolt 174 (see an arrow M shown in FIG. 15), the height of the second operating handle 160 can be adjusted to a desired position.

On the other hand, as shown in FIG. 16 (b), when the height adjustment lever 170 is turned in an arrow L direction (see FIG. 16 (c)), a protrusion part 171a of the height adjustment cam 171 acts in a direction where the tip part of the right side operating handle pipe 161R, which is compressed and formed in the plate shape, is always pressed, so that the gap 191 (see FIG. 16 (b)) generated between the first right inner clip washer 162R and the second right inner clip washer 181R is eliminated, the gap 191 (not shown) generated between the first left inner clip washer 162L and the second left inner clip washer 181L is eliminated, and the uneven parts 190 and the uneven parts 190, which are formed on the opposite surfaces, are engaged with each other. By means of this, the height of the second operating handle 160 is fixed.

By means of this, since the height adjustment lever 170 can be easily operated with one-touch operation, the adjustment of the height of the second operating handle 160 becomes easy.

Additionally, the relation among the radii r1, r2, and r3 is allowed to be r2<r3<r1 (see FIGs. 16 (b)). Here, each of the radii r1, r2, and r3 denotes the distance between the center of the turning shaft 173 and each part of the height adjustment cam 171. By means of this, the height adjustment lever 170 can be turned in the arrow L direction, but it is difficult to turn the height adjustment lever 170 in an arrow N direction (see FIG. 16 (b)), so that the height adjustment lever 170 can be prevented from hanging downward (see the arrow N shown in FIG. 16 (b)).

By the way, in the above described embodiment, a case is described where the parking brake device 100 is disposed on the left side axle 50L. However, the present invention is not limited to this. For instance, the parking brake device 100 may be disposed on the right side axle 50R, or may be disposed on the left side axle 50L and the right side axle 50L.

Additionally, in the above described embodiment, a case is described where the main clutch operating lever 400, the main clutch lock lever 500, and the parking brake lever 600 are collectively arranged on the right side part 60R of the operating handle (see FIG. 1). However, the present invention is not limited to this. For instance, the main clutch operating lever 400, the main clutch lock lever 500, and the parking brake lever 600 may be collectively arranged on the left side part 60L of the operating handle.

Additionally, in the above described embodiment, a case is described where the main clutch lock lever 500 is arranged on the right side of the operating handle on which the main clutch operating lever 400 is disposed and the parking brake lever 600 is arranged on the left side of the operating handle on which the main clutch operating lever 400 is disposed (see FIG. 9 (a)). However, the present invention is not limited to this. For instance, the main clutch lock lever 500 may be arranged on the left side of the operating handle on which the main clutch operating lever 400 is disposed and the parking brake lever 600 may be arranged on the right side of the operating handle on which the main clutch operating lever 400 is disposed.

Additionally, in the above described embodiment, the walk-behind tiller 1 is described where the parking brake device 100 is disposed on any one of the right and left side axles 50R and 50L or on both axles 50R and 50L which protrude from the transmission case 30 in the right-left direction (that is, this configuration is referred to as "first configuration"), and the main clutch operating lever 400, the main clutch lock lever 500, and the parking brake lever 600 are collectively arranged on the right side part 60R of the operating handle or the left side part 60L of the operating handle (that is, this configuration is referred to as "second configuration"). However, the present invention is not limited to this. For instance, the walk-behind tiller 1 may be provided with the conventional configuration which is substituted for any one of the "first configuration" and the "second configuration".

A walk-behind tiller according to the present invention has such effects that plural levers related to each other can be collectively arranged and a compact structure can be achieved, and is useful for a walk-behind tiller.

## Claims

1. A walk-behind tiller comprising:
a transmission case (30) housing a transmission mechanism which transmits driving power from an engine (20) that is fixed to a frame (10) to a pair of right and left traveling wheels (2R, 2L) via right and left axles (50L, 50R), and to tilling claws (41) that till a farm filed,
**characterized in that** the walk-behind tiller comprises
a main clutch operating lever (400) which switches between connection and disconnection of transmission of the driving power from the engine (20);
a main clutch lock lever (500) which restrains a switching operation to the connection performed by the main clutch operating lever (400), and releases the restraining, and
a parking brake lever (600) which switches between operation and release of a parking brake device (100) which stops a movement of the traveling wheels (2R, 2L), wherein
the main clutch operating lever (400), the main clutch lock lever (500), and the parking brake lever (600) are arranged on any one side part of a left side part and a right side part of an operating handle (60) which extends reward from a vehicle body.

2. The walk-behind tiller according to claim 1, wherein
the main clutch operating lever (400) is provided above any one (61R) of right and left gripping parts (61R, 61L) of the operating handle (60),
the main clutch lock lever (500) is provided on a right side or a left side of the gripping part (61R) above which the main clutch operating lever (400) is provided.

3. The walk-behind tiller according to claim 2, wherein
the parking brake lever (600) is provided on an opposite side to the main clutch lock lever (500) with reference to the gripping part (61R) above which the main clutch operating lever (400) is provided.

4. The walk-behind tiller according to claim 1 or 2, wherein
the main clutch lock lever (500) always restrains the switching operation to the connection performed by the main clutch operating lever (400) when the main clutch operating lever (400) is located on a position of the disconnection.

5. The walk-behind tiller according to claim 3 or 4, wherein
when the restraining by the main clutch lock lever (500) is released and the main clutch operating lever (400) is operated to the connection, and in a case where the parking brake lever (600) is located on a position of the operation, the parking brake lever (600) is linked with the operation to the connection of the main clutch operating lever (400) to move to a position of the release.

## Patentansprüche

1. Von hinten lenkbares Bodenbearbeitungsgerät, umfassend:
ein Getriebegehäuse (30), das einen Getriebemechanismus enthält, der Antriebskraft über rechte und linke Achsen (50L, 50R) von einem auf einem Gestell (10) befestigten Motor (20) auf ein Paar Laufräder (2R, 2L), die auf der linken und rechten Seite angeordnet sind, sowie auf Fräsklauen (41), die Ackerland bearbeiten, überträgt,
**dadurch gekennzeichnet, dass** das Bodenbearbeitungsgerät umfasst
einen Hauptkupplungshebel (400), der die Antriebskraftübertragung vom Motor (20) koppelt und entkoppelt;
einen Hauptkupplungsschlosshebel (500), der einen Schaltvorgang auf die vom Hauptkupplungshebel (400) ausgeführte Kopplung beschränkt und diese Einschränkung aufhebt, und
einen Feststellbremshebel (600), der zwischen Ver- und Entriegelung einer Feststellbremsvorrichtung (100), die eine Bewegung der Laufräder (2R, 2L) stoppt, wobei
der Hauptkupplungshebel (400), der Hauptkupplungsschlosshebel (500) und der Feststellbremshebel (600) entweder auf einem linken oder einen rechten Seitenteil eines Bediengriffs (60) angeordnet sind, der eine Belohnung von einem Fahrzeugkörper ausdehnt.

2. Bodenbearbeitungsgerät nach Anspruch 1, wobei:
der Hauptkupplungshebel (400) oberhalb eines (61R) rechten oder linken Griffteils (61R, 61L) des Bediengriffs (60) vorgesehen ist,
der Hauptkupplungsschlosshebel (500) auf einer rechten oder linken Seite des Griffteils (61R), oberhalb dessen der Hauptkupplungshebel (400) vorgesehen ist.

3. Bodenbearbeitungsgerät nach Anspruch 2, wobei:
der Feststellbremshebel (600) bezogen auf das Griffteil (61R), oberhalb dessen der Hauptkupplungshebel (400) vorgesehen ist, auf einer dem Hauptkupplungsschlosshebel (500) gegenüberliegenden Seite vorgesehen ist.

4. Bodenbearbeitungsgerät nach Anspruch 1 oder 2, wobei:
der Hauptkupplungsschlosshebel (500) den Umschaltvorgang auf die vom Hauptkupplungshebel (400) ausgeführte Kopplung beschränkt, wenn sich der Hauptkupplungshebel (400) in einer Entkopplungsposition befindet.

5. Bodenbearbeitungsgerät nach Anspruch 3 oder 4, wobei die Einschränkung durch den Hauptkupplungsschlosshebel (500) aufgehoben wird und der Hauptkupplungshebel (400) zur Kopplung betrieben wird, und wenn der Feststellbremshebel (600) sich in einer Betriebsposition befindet, der Feststellbremshebel (600) mit dem Vorgang mit der Kopplung des Hauptkupplungshebel (400) verbunden ist, um sich in eine Entriegelungsposition zu verschieben.

## Revendications

1. Sarcleur à pousser comprenant :
un boîtier de transmission (30) logeant un mécanisme de transmission qui transmet la puissance d'entraînement d'un moteur (20) qui est fixé à un bâti (10) à une paire de roues mobiles droite et gauche (2R, 2L), via des essieux droit et gauche (50L, 50R) à des griffes de sarclage (41) qui sarclent un champ,
**caractérisé en ce que** le sarcleur à pousser comprend :
un levier d'actionnement d'embrayage principal (400) qui commute entre le raccordement et la déconnexion de transmission de la puissance d'entraînement du moteur (20) ;
un levier de verrouillage d'embrayage principal (500) qui limite une opération de passage en raccordement réalisée par le levier d'actionnement d'embrayage principal (400) et libère la retenue, et
un levier de frein de stationnement (600) qui commute entre le fonctionnement et la libération d'un dispositif de frein de stationnement (100) qui arrête un mouvement des roues mobiles (2R, 2L), dans lequel :
le levier d'actionnement d'embrayage principal (400), le levier de verrouillage d'embrayage principal (500) et le levier de frein de stationnement (600) sont agencés sur n'importe quelle partie latérale d'une partie gauche et d'une partie droite d'une poignée d'actionnement (600) qui s'étend vers l'arrière à partir d'une carrosserie de véhicule.

2. Sarcleur à pousser selon la revendication 1, dans lequel :
le levier d'actionnement d'embrayage principal (400) est prévu au-dessus de l'une quelconque (61R) des parties de préhension droite et gauche (61R, 61L) de la poignée d'actionnement (60),
le levier de verrouillage d'embrayage principal (500) est prévu du côté droit ou du côté gauche de la partie de préhension (61R) au-dessus de laquelle le levier d'actionnement d'embrayage principal (400) est prévu.

3. Sarcleur à pousser selon la revendication 2, dans lequel :
le levier de frein de stationnement (600) est prévu sur un côté opposé au levier de verrouillage d'embrayage principal (500) en référence à la partie de préhension (61R) au-dessus de laquelle le levier d'actionnement d'embrayage principal (400) est prévu.

4. Sarcleur à pousser selon la revendication 1 ou 2, dans lequel :
le levier de verrouillage d'embrayage principal (500) limite toujours l'opération de passage en raccordement réalisée par le levier d'actionnement d'embrayage principal (400) lorsque le levier d'actionnement d'embrayage principal (400) est positionné dans une position de déconnexion.

5. Sarcleur à pousser selon la revendication 3 ou 4, dans lequel :
lorsque la retenue par le levier de verrouillage d'embrayage principal (500) est libérée et que le levier d'actionnement d'embrayage principal (400) est actionné en raccordement, et dans le cas dans lequel le levier de frein de stationnement (600) est positionné dans une position de fonctionnement, le levier de frein de stationnement (600) est relié avec l'opération de raccordement du levier d'actionnement d'embrayage principal (400) pour passer dans la position de libération.
